Europäisches Patentamt

European Patent Office

Office européen des brevets

(19)

(11) EP 0 985 900 B1

(12) FASCICULE DE BREVET EUROPEEN

(45) Date de publication et mention
de la délivrance du brevet:
**15.10.2003 Bulletin 2003/42**

(51) Int Cl.⁷: **F41G 7/22**, G05D 1/12

(21) Numéro de dépôt: **99402168.1**

(22) Date de dépôt: **01.09.1999**

(54) **Procédé et dispositif de guidage d'un engin volant, notamment un missile, sur une cible**

Verfahren und Vorrichtung zum Lenken eines Flugkörpers, insbesondere einer Kampfrakete, auf ein Ziel

Method and device for guiding a flying device, in particular a missile, to a target

(84) Etats contractants désignés:
**DE ES GB IT SE**

(30) Priorité: **02.09.1998 FR 9810947**

(43) Date de publication de la demande:
**15.03.2000 Bulletin 2000/11**

(73) Titulaire: **AEROSPATIALE MATRA**
**75016 Paris (FR)**

(72) Inventeurs:
• **Larcher, Eric**
**92250 La Garenne Colombes (FR)**

• **Delmau, Cyril**
**75016 Paris (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 751 367**          **US-A- 4 168 813**
**US-A- 5 647 560**

**Description**

La présente invention concerne un procédé et un dispositif de guidage d'un engin volant, notamment un missile, sur une cible.

Plus précisément, lesdits procédé et dispositif sont destinés à la mise en oeuvre d'un autoguidage, c'est-à-dire un guidage qui peut être réalisé uniquement à l'aide d'informations disponibles sur ledit engin volant.

De façon connue, pour un missile, notamment un missile air-sol, un tel autoguidage est mis en oeuvre dans la phase terminale du guidage, à l'approche de la cible.

Généralement, ledit autoguidage est réalisé à l'aide d'informations fournies par un autodirecteur, et en particulier d'informations relatives à ladite cible qui est située dans un champ de vision dudit autodirecteur. A cet effet, la ligne de visée de ce dernier est continuellement asservie.

De façon connue, un tel asservissement présente des objets différents, en fonction de la phase de guidage considérée, et consistant :

- avant "l'accrochage", c'est-à-dire avant la détection effective de la cible, à pointer ledit autodirecteur dans l'environnement supposé de ladite cible ; et
- après "l'accrochage", à maintenir la cible dans le champ de mesure (restreint par conception) dudit autodirecteur et à poursuivre ladite cible.

Les ordres de guidage dudit engin volant se déduisent alors, de façon connue, en utilisant les signaux fournis par l'autodirecteur en poursuite sur la cible, lesdits ordres de guidage étant mis en oeuvre par le pilotage de l'engin réalisant en tangage-lacet les manoeuvres commandées, avec éventuellement un asservissement en roulis, soit pour maintenir le roulis de l'engin constant, soit pour répartir la charge aérodynamique en effectuant un contrôle en roulis aérodynamique de l'engin pour améliorer les caractéristiques aérodynamiques telles que le facteur de charge utilisable, la charge sur les actionneurs de pilotage, les couples de roulis induits, ...

Cette solution usuelle d'autoguidage présente toutefois de nombreux inconvénients. Elle est notamment complexe et coûteuse, puisqu'elle nécessite de façon connue, pour sa mise en oeuvre, en plus du système de détection de l'autodirecteur, plusieurs autres dispositifs de mesure et de traitement coûteux, notamment :

- des dispositifs mécaniques rendant mobile la ligne de visée, avec une mobilité selon au moins deux ou trois axes pour un guidage dans l'espace. Ces dispositifs mécaniques comportent, par exemple, des articulations avec un montage à la cardan et une motorisation de chaque axe ;
- des équipements de mesure et des moyens électroniques associés pour le contrôle de boucles d'asservissement de la ligne de visée.

Pour remédier à ces inconvénients, il est connu d'utiliser un détecteur, par exemple du type à détection infrarouge ou optique, notamment laser, qui est rigidement lié à l'engin volant et qui réalise la fonction globale de détection (localisation et identification) de la cible.

Toutefois, une telle mise en oeuvre, qui présente des avantages indéniables par rapport à la solution usuelle précitée, nécessite un détecteur présentant un champ de mesure de taille importante pour, l'engin volant étant guidé sur une trajectoire vers la cible :

- avant l'accrochage, avoir la cible dans ledit champ de mesure, en tenant compte, non seulement d'erreurs de désignation d'objectif et de guidage de l'engin, mais également des incidences dudit engin dues aux perturbations de l'environnement (vent, effet de la pesanteur, ...) et à la réalisation du facteur de charge ; et
- après l'accrochage, continuer à maintenir la cible dans ledit champ de mesure.

Bien entendu, la nécessité d'une taille importante pour le champ de mesure du détecteur entraîne des inconvénients, notamment en termes de coût, d'encombrement, de masse, etc ...

La présente invention a pour objet de remédier à ces inconvénients et en particulier de réduire la taille du champ de mesure du détecteur en restant compatible avec l'efficacité du guidage. Elle concerne un procédé de guidage d'un engin volant sur une cible, ledit guidage présentant différentes phases successives, dont une phase terminale pour laquelle au moins le guidage est réalisé à l'aide de mesures effectuées par un détecteur monté sur ledit engin volant et pointé avec sa ligne de visée vers ladite cible de sorte qu'une projection de cette dernière est située sur un champ de mesure dudit détecteur, ainsi qu'à l'aide d'informations, notamment de navigation et inertielles, issues de sources d'informations montées sur ledit engin volant.

A cet effet, selon l'invention, ledit procédé est remarquable en ce qu'au moins dans ladite phase terminale, on commande des attitudes dudit engin volant de manière à centrer la projection de la cible par rapport à une première direction dudit champ de mesure, en ce que la ligne de visée dudit détecteur est mobile autour d'une seconde direction dudit champ de mesure, différente de ladite première direction, et en ce qu'au moins dans ladite phase terminale, on commande la mobilité de la ligne de visée dudit détecteur de manière à centrer ladite projection de la cible par rapport à ladite seconde direction.

Ainsi, comme grâce à l'invention, la projection de la cible sur le champ de mesure du détecteur est automatiquement centrée par rapport auxdites première et seconde directions qui sont de préférence orthogonales, respectivement par la commande des attitudes de l'engin volant et de la mobilité de ladite ligne de visée, ledit champ de mesure peut présenter une taille réduite de sorte que ledit détecteur permet de remédier aux inconvénients (coût, encombrement, masse, ...) précités.

De façon avantageuse, au moins dans ladite phase terminale, on estime le mouvement relatif entre l'engin volant et la cible, ce qui permet en particulier d'estimer la cinématique de la cible par rapport à l'engin volant et ainsi de mettre en oeuvre le procédé conforme à l'invention même :

- lorsque la projection de la cible sort du champ de mesure du détecteur ; et même
- dans les phases de vol, pour lesquelles une telle projection n'existe pas ou pas encore.

De plus, avantageusement, au moins dans ladite phase terminale, on commande des attitudes dudit engin volant de manière à répartir la charge aérodynamique sur des axes liés audit engin volant.

Une telle répartition de la charge aérodynamique présente plusieurs avantages et permet notamment :

- de soulager les vérins des gouvernes de pilotage de l'engin volant ; et
- d'augmenter le domaine d'incidence totale pilotable.

De plus, de façon avantageuse, on commande, comme attitude de l'engin volant, le roulis de ce dernier.

Ainsi, comme le guidage de l'engin volant est réalisé de façon usuelle en tangage et en lacet, la commande (de roulis) conforme à l'invention en vue du centrage et, le cas échéant, de la répartition de la charge aérodynamique est compatible avec l'efficacité du guidage.

Pour déterminer un ordre de commande de roulis, on utilise à cet effet, de préférence, des valeurs écartométriques déterminées au moins à partir de certaines des informations suivantes :

- des informations relatives à des mesures effectuées par ledit détecteur ;
- des informations inertielles et de navigation ; et
- des informations relatives à l'orientation de la ligne de visée du détecteur, par rapport à l'engin volant.

Dans un mode de mise en oeuvre avantageux, pour réaliser simultanément une répartition de la charge aérodynamique sur des axes liés à l'engin volant et le centrage de la projection de la cible, on commande le roulis à partir d'un ordre $\Delta\varphi co$ de variation de roulis qui vérifie la relation :

$$\Delta\varphi co = \begin{cases} \Delta\varphi coA, \text{ si la valeur } \Delta\varphi coA \text{ est définie entre des valeurs } \Delta\varphi co1 \text{ et } \Delta\varphi co2 \\ \Delta\varphi coE, \text{ sinon} \end{cases}$$

dans laquelle :

- $\Delta\varphi coA$ est un ordre de variation de roulis usuel pour répartir la charge aérodynamique ;
- $\Delta\varphi co1$ et $\Delta\varphi co2$ sont des ordres de variation de roulis, déterminés à partir de l'état effectif dudit engin volant ; et
- $\Delta\varphi coE$ est un ordre de variation de roulis déterminé à partir desdits ordres $\Delta\varphi co1$ et $\Delta\varphi co2$.

De plus, de façon avantageuse, lesdits ordres $\Delta\varphi co1$ et $\Delta\varphi co2$ de variation de roulis vérifient respectivement les relations suivantes :

$$tg\Delta\varphi co1 = \frac{U1 + U01}{\left[\frac{|U2|}{e} + K\right] \times Signe\ (U2)}$$

$$tg\Delta\varphi co2 = \frac{U1 - U02}{\left[\frac{|U2|}{e} + K\right] \times Signe\ (U2)}$$

dans lesquelles :

- tg représente la tangente ;
- e, K, U01 et U02 sont des valeurs prédéterminées ; et
- U1 et U2 sont des valeurs écartométriques.

Pour augmenter les performances des traitements mis en oeuvre, avantageusement, lesdites valeurs écartométriques U1 et U2 vérifient respectivement les relations suivantes :

$$U1 = \theta^+EBZu$$

$$U2 = \theta^+EBYu$$

dans lesquelles $\theta^+EBZu$ et $\theta^+EBYu$ représentent respectivement des écarts d'attitudes par rapport à la droite engin-cible en tangage et en lacet déterminés, d'une part à partir d'attitudes en tangage et en lacet prévues par le guidage de l'engin volant et, d'autre part, à partir d'attitudes courantes de l'engin volant, en tangage et en lacet.

En outre, de façon avantageuse, les écarts d'attitudes commandés par rapport à la droite engin-cible sont limités à des valeurs prédéterminées, ce qui permet notamment de limiter le guidage de l'engin volant par rapport au pointage de la cible et donc de favoriser ce dernier.

Dans cette optique, dans un mode de réalisation particulier, on détermine les ordres de commande de variations d'attitudes de manière à favoriser, selon la phase de vol considérée, au moins l'une des actions suivantes : le guidage de l'engin volant, le centrage de la projection de la cible sur le détecteur et la répartition de la charge aérodynamique.

Par ailleurs, on peut guider ledit engin volant de manière à limiter son incidence et son dérapage cinématiques, au moins dans une phase ultime de ladite phase terminale, c'est-à-dire de préférence juste avant le contact avec la cible, en particulier pour favoriser l'efficacité de la destruction de cette dernière.

La présente invention concerne également un dispositif de guidage d'un engin volant sur une cible, ledit dispositif comportant :

- des sources d'informations engendrant des informations relatives audit engin volant ;
- un détecteur susceptible de réaliser des mesures relatives à la cible, monté sur ledit engin volant, et pointé avec sa ligne de visée vers ladite cible de sorte qu'une projection de cette dernière est située sur un champ de mesure dudit détecteur ;
- une unité de calcul pour déterminer, à partir desdites informations et desdites mesures, au moins dans une phase terminale dudit guidage, des ordres de guidage ; et
- des organes de pilotage réalisant le guidage dudit engin volant en fonction desdits ordres de guidage.

Selon l'invention, ledit dispositif est remarquable en ce qu'il comporte de plus des moyens de calcul pour déterminer des ordres de variation d'attitudes dudit engin volant permettant de centrer la projection de ladite cible par rapport à une première direction dudit champ de mesure, lesdits ordres de variation d'attitudes étant transmis auxdits organes de pilotage, en ce que ledit détecteur présente une ligne de visée qui est mobile selon une seconde direction du champ de mesure, différente de ladite première direction, en ce que le dispositif conforme à l'invention comporte des moyens d'orientation commandables pour orienter ladite ligne de visée du détecteur, et en ce que lesdits moyens de calcul commandent lesdits moyens d'orientation de manière à obtenir le centrage de ladite projection de la cible par rapport à ladite seconde direction.

Ainsi, le dispositif conforme à l'invention est peu complexe et peu coûteux.

De plus, avantageusement, ledit dispositif comporte :

- un moyen pour estimer le mouvement relatif entre l'engin volant et la cible. Les estimations ainsi réalisées peuvent être utilisées pour augmenter la précision et les performances du dispositif et également pour pallier l'absence de la projection de la cible dans le champ de mesure ; et/ou
- un moyen pour superviser ledit dispositif, qui est formé de préférence de manière à favoriser, selon la phase de vol considérée, au moins l'une des actions suivantes :

  . le centrage de la projection de la cible sur le champ de mesure du détecteur ;
  . le guidage de l'engin volant ; et
  . la répartition de la charge aérodynamique sur des axes liés audit engin volant.

En outre, pour simplifier la réalisation, avantageusement, lesdits moyens de calcul sont intégrés dans ladite unité de calcul.

Par ailleurs, de façon avantageuse, la mobilité de ladite ligne de visée correspond à une orientation autour d'un axe lié à l'engin. Le dispositif conforme à l'invention nécessite donc peu de pièces mobiles, la mobilité étant mise en oeuvre selon un seul axe, et avec une motorisation pouvant être rustique, comme précisé ci-dessous, tout en conservant une taille réduite du champ de mesure.

En outre, dans un mode de réalisation préféré, lesdits moyens d'orientation comportent :

- un système de renvoi optique, comprenant par exemple un miroir fixe, un miroir mobile et une optique de focalisation ;
- un moteur, de préférence un moteur couple ; et
- un moyen de recopie de l'orientation comprenant, par exemple, un potentiomètre.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre schématiquement un engin volant muni d'un dispositif conforme à l'invention et guidé vers une cible.

La figure 3 montre schématiquement un champ de mesure d'un détecteur conforme à l'invention.

Les figures 4A à 4D montrent ledit champ de mesure dans trois positions différentes (les figures 4B et 4C montrant la même position) permettant d'illustrer les effets des commandes conformes à l'invention.

La figure 5 montre schématiquement des moyens d'orientation de la ligne de visée d'un détecteur.

La figure 6 illustre schématiquement un système de renvoi optique de moyens d'orientation de la ligne de visée.

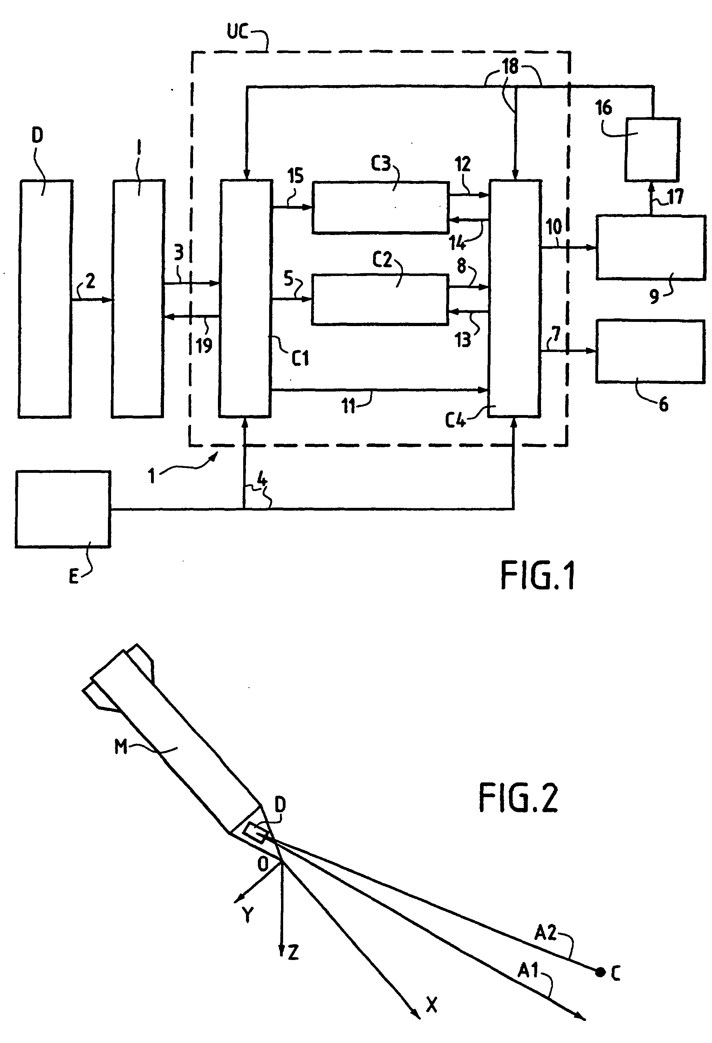

Le dispositif 1 conforme à l'invention et représenté schématiquement sur la figure 1 est destiné au guidage d'un engin volant, par exemple un missile M, vers une cible C, tel que représenté sur la figure 2.

Sur la figure 2, on a de plus indiqué un référentiel OXYZ relatif audit missile M et tel que :

- OX représente l'axe longitudinal dudit missile M ;
- OY et OZ représentent deux axes perpendiculaires du plan passant par O et perpendiculaire à OX.

On prévoit également des directions $Y^+$ et $Z^+$ telles que $OXY^+Z^+$ soit un autre référentiel lié à l'engin volant M, déduit du référentiel OXYZ par une rotation d'angle constant autour de OX et tel que la ligne de visée du détecteur D présente une mobilité autour de $Y^+$, correspondant à la rotation d'un angle EA de manière à former des directions A1 et Za déduits de X et $Z^+$ par ladite rotation d'angle EA, A1 correspondant à la ligne de visée du détecteur, (A, Ya=$Y^+$, Za) correspondant au plan de mesure du détecteur D, A étant un point du champ de mesure CM.

Les vecteurs unitaires des systèmes d'axes (X,Y,Z), (X,$Y^+$,$Z^+$) sont notés respectivement ($\vec{X}$, $\vec{Y}$, $\vec{Z}$), ($\vec{X}$, $\vec{Y}^+$, $\vec{Z}^+$).

Ledit dispositif 1 est du type comportant :

- un détecteur D, par exemple infrarouge ou optique, notamment du type laser, qui est pointé sur ladite cible C et qui fournit des informations relatives à cette dernière et à son environnement ;

- des moyens de traitement I, par exemple de traitement d'images ou de taches laser, qui à partir des informations fournies par le détecteur D, par l'intermédiaire d'une liaison 2, fournissent des mesures relatives à la cible C, à savoir au moins des mesures écartométriques représentatives de l'écart angulaire entre l'axe de mesure A1 relatif audit détecteur D et un axe de référence A2. Selon l'invention, ledit axe de référence A2 correspond à la droite passant par un point de référence dudit détecteur D et un point de ladite cible C, qui est détecté par ledit détecteur D ;
- un ensemble E de sources d'informations montées sur ledit missile M et susceptibles de délivrer des informations relatives audit missile M, notamment des informations inertielles et de navigation ;
- un moyen de calcul C1 qui est relié, par l'intermédiaire de liaisons 3 et 4, respectivement auxdits moyens de traitement I et audit ensemble E de sources d'informations et un moyen de calcul C2 qui est relié par une liaison 5 audit moyen de calcul C1 et qui détermine, à partir de mesures et d'informations reçues, des ordres de guidage selon lesdits axes OY et OZ, du type poursuite ou navigation proportionnelle, comme précisé ci-dessous. Selon l'invention, ledit moyen de calcul C1 reconstruit la direction de l'axe de référence A2 et en estime la cinématique à partir d'informations issues des moyens de traitement I, de l'ensemble E de sources d'informations et d'un moyen de mesure 16 précisés ci-dessous, la reconstruction étant effectuée après une remise en phase de toutes ces informations ; et
- des organes de pilotage 6 qui réalisent le guidage du missile M, à partir des ordres de guidage reçus par l'intermédiaire d'une liaison 7 d'un moyen de calcul C4 relié par une liaison 8 au moyen de calcul C2.

On notera qu'avant l'accrochage (ou la détection) de la cible C par le détecteur D et même après (selon le mode de réalisation), les mesures écartométriques sont remplacées par une estimation de ladite écartométrie, à partir d'informations de navigation du missile M, associées à une référence inertielle, et d'un positionnement estimé de la cible C.

De plus, le moyen de calcul C2 permet de déterminer des ordres de guidage selon lesdits axes OY et OZ, du type poursuite ou navigation proportionnelle ou lois de guidage usuelles (lois optimales, lois intégrées, ...) pouvant se ramener à des ordres à l'engin M, en axes OY et OZ, d'accélération commandée $\overrightarrow{\Gamma co} = \Gamma Yco\,\vec{Y} + \Gamma Zco\,\vec{Z}$ ou de vitesse angulaire commandée $\overrightarrow{\Omega co} = \Omega Yco\,\vec{Y} + \Omega Zco\,\vec{Z}$ ou à des variations de direction du vecteur vitesse commandée $\overrightarrow{\Delta\gamma co} = \Delta\gamma Yco\,\vec{Y} + \Delta\gamma Zco\,\vec{Z}$ ou à des variations d'attitude commandée $\overrightarrow{\Delta\theta co} = \Delta\theta Yco\,\vec{Y} + \Delta\theta Zco\,\vec{Z}$.

On notera que les traitements d'estimation de la cinématique engin-cible mis en oeuvre par le moyen de calcul C1 fournissent toutes les données intervenant dans l'élaboration des accélérations commandées, tels que des écarts entre l'axe engin et la droite engin-cible ou entre l'axe du vecteur vitesse et la droite engin-cible, la vitesse de rotation de la droite engin-cible, la distance engin-cible, la vitesse de rapprochement engin-cible, ...

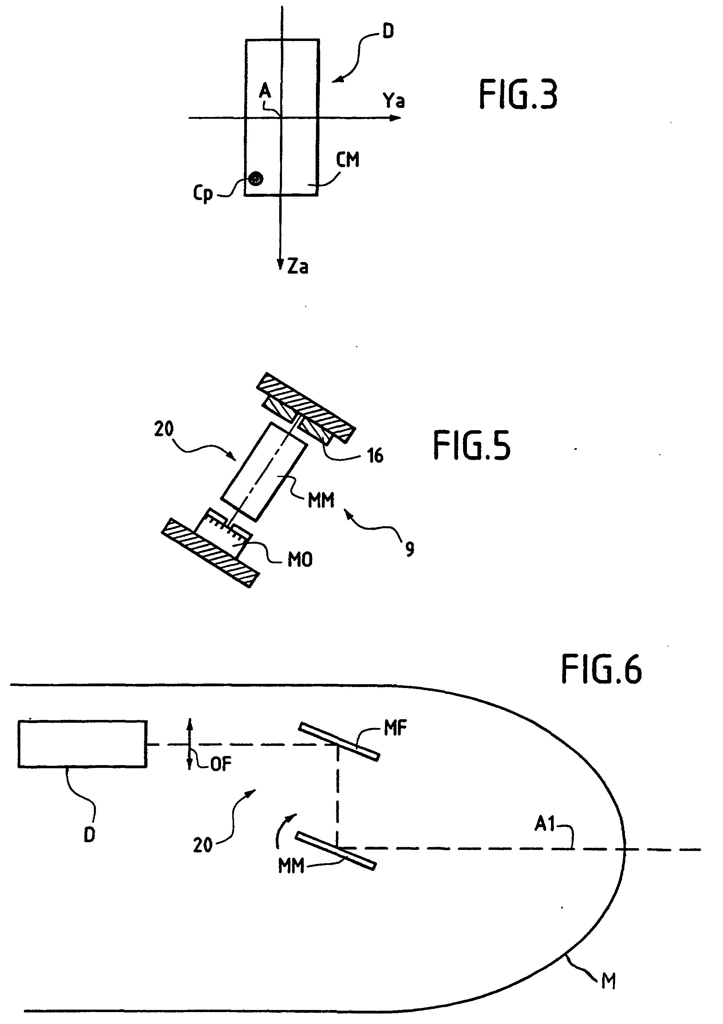

Comme on peut le voir sur la figure 3, le détecteur D présente le champ de mesure CM défini par un plan AYaZa comprenant la projection Cp de la cible C, qui illustre la position de cette dernière. Ledit point A est situé au centre dudit champ de mesure CM.

Selon l'invention :

- ledit dispositif 1 comporte de plus des moyens de calcul C3 et C4 susceptibles de déterminer des ordres de commande précisés ci-dessous du missile M permettant de modifier la position du missile M de manière à centrer ladite projection Cp (de la cible C sur le champ de mesure CM) par rapport à la direction AZa ;
- ledit détecteur D présente une ligne de visée A1 qui est mobile autour de la direction AYa du champ de mesure CM ;
- ledit dispositif **1** comporte à cet effet des moyens d'orientation **9** commandables pour déplacer ladite ligne de visée A1 du détecteur D ; et
- ledit moyen de calcul C4 commande lesdits moyens d'orientation 9 par une liaison 10 de manière à obtenir le centrage de ladite projection Cp de la cible C par rapport à ladite direction AYa.

Ainsi, comme la projection Cp est centrée automatiquement, à une tolérance près, selon ces directions AYa et AZa, le champ de mesure CM peut présenter une taille réduite, ce qui permet de remédier aux inconvénients (coût, encombrement, masse, ...) dus à un champ de mesure important.

On notera de plus que, selon l'invention :

- le moyen de calcul C4 relié aux moyens de calcul C1, C2 et C3 respectivement par des liaisons 11, 8 et 12 élabore des commandes d'orientation de la ligne de visée autour d'un axe lié à l'engin M et des commandes transmises aux organes de pilotage 6 pour les manoeuvres de roulis, tangage et lacet ; et
- le moyen de calcul C3 détermine les écarts entre le vecteur unitaire $\overrightarrow{uEB}$ de la droite engin-cible, correspondant à l'axe A2, et le vecteur unitaire $\vec{X}$ de l'axe longitudinal de l'engin volant M, par exemple sous la formulation vectorielle $\overrightarrow{\theta EB} = \overrightarrow{uEB} \wedge \vec{X}$, ce qui définit des écarts selon les axes Y, Z ou $Y^+$, $Z^+$ vérifiant :

$$\overrightarrow{\theta EB} = \overrightarrow{uEB} \wedge \vec{X} = \theta EBY \vec{Y} + \theta EBZ \vec{Z} = \theta^+ EBY \overrightarrow{Y^+} + \theta^+ EBZ \overrightarrow{Z^+}$$

En outre, comme on peut le voir sur la figure 1 :

- le moyen de calcul C4 est relié aux moyens de calcul C2 et C3 par des liaisons de retour 13 et 14 ;
- le moyen de calcul C3 est relié au moyen de calcul C1 par une liaison 15 ;
- les moyens de traitement I sont reliés par une liaison de retour 19 au moyen de calcul C1 ;
- le moyen 16 de mesure de l'orientation de la ligne de visée est associé aux moyens d'orientation 9, comme illustré par une liaison 17, et est relié par une liaison 18 aux moyens de calcul C1 et C4 ; et
- lesdits moyens de calcul C1 à C4 sont intégrés dans une unité centrale UC.

Dans un mode de réalisation préféré, ledit moyen de calcul C4 calcule, selon l'invention, un ordre de commande $\Delta\varphi co$ en roulis transmis aux organes de pilotage 6 par la liaison 7, qui engendrent alors une rotation correspondante du missile M autour de l'axe OX.

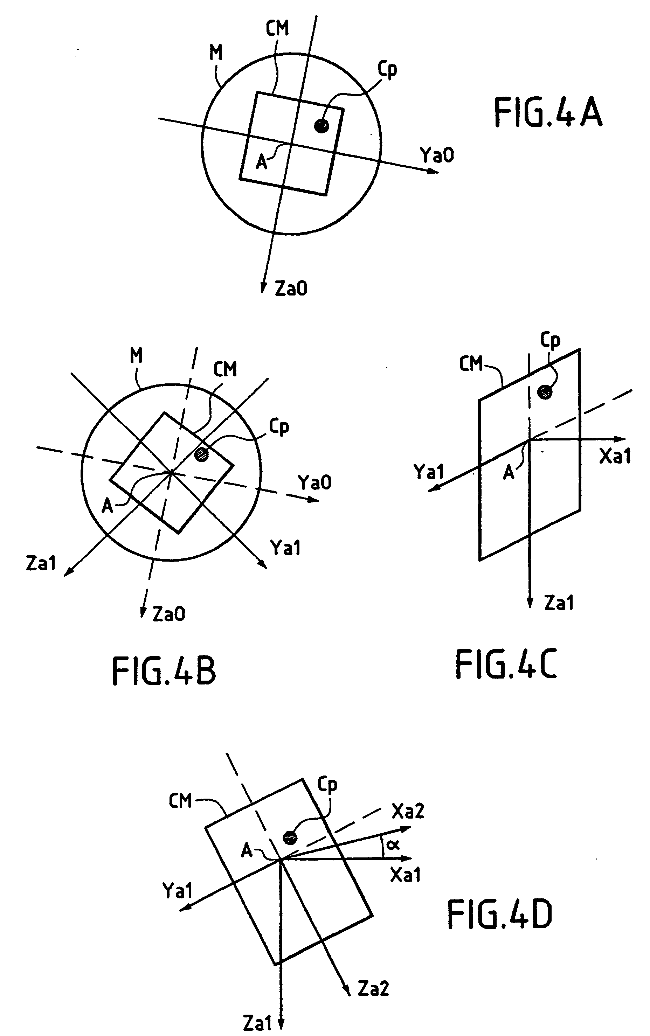

L'effet dû à cette commande en roulis pour le centrage de l'écartométrie est mis en évidence en comparant la figure 4A aux figures 48 et 4C qui illustrent la même situation :

- la figure 4A illustrant la situation où la projection Cp n'est pas centrée, ni par rapport à l'axe AZa, ni par rapport à l'axe AYa, la position du champ de mesure CM étant définie dans cette position décentrée par des axes AYa0 et AZa0 ; et
- les figures 4B et 4C illustrant la situation après le centrage dû à ladite commande en roulis conforme à l'invention. Le champ de mesure CM se trouve alors dans une position définie par des axes AYa1 et AZa1.

On notera que les figures 4A et 4B montrent schématiquement l'arrière du missile M avec la position du champ de mesure CM.

De plus, l'effet sur la position de la projection Cp dû à l'action des moyens 9, est mis en évidence en comparant les figures 4B et 4C à la figure 4D, cette dernière illustrant la situation après le centrage engendré par le déplacement de la ligne de visée A1. La nouvelle position du champ de mesure CM est définie par l'axe AYa1 et un axe AZa2. La ligne de visée A1 est située selon un axe AXa2 qui est déduit de l'axe AXa1 par une rotation d'un angle $\alpha$.

Selon l'invention, on calcule ledit ordre de commande $\Delta\varphi co$ à partir de valeurs écartométriques qui sont représentatives de l'écartométrie entre les axes OX et A2 et qui sont déterminées par les moyens de calcul C1 et C3, à partir des traitements effectués par les moyens I et/ou des informations fournies par ledit ensemble E de sources d'informations, et de l'accélération aérodynamique prévue par le guidage. L'accélération aérodynamique prévue par le guidage est déduite, de façon usuelle, des commandes de guidage (en accélération ou en vitesse angulaire, ou en variation de direction du vecteur vitesse ou en variation d'attitude), en tenant compte des fonctions de transfert aérodynamiques de l'engin volant M et des transferts connus de la cellule de l'engin volant M liant les vitesses angulaires de la cellule à son accélération, avec une compensation de la pesanteur.

Dans un mode de réalisation préféré, l'ordre $\Delta\varphi co$ est compris entre $-\pi$ et $\pi$ et est défini à partir de l'expression :

$$\Delta\varphi co = \begin{cases} \Delta\varphi coA, \text{ si } \Delta\varphi coA \text{ est compris entre des commandes } \Delta\varphi co1 \text{ et } \Delta\varphi co2 \\ \Delta\varphi coE, \text{ sinon} \end{cases}$$

dans laquelle :

- $\Delta\varphi coA$ est une commande en variation de roulis pour répartir la charge aérodynamique, calculée de façon connue à partir de la relation :

$$\Delta\varphi A = \frac{|AZco| - |AYco|}{|AZco| + |AYco|} \times \text{Signe} (AYco \times AZco),$$

dans laquelle AYco et AZco sont des accélérations aérodynamiques commandées selon les axes OY et OZ de l'engin volant M, sur lesquels on veut répartir la charge aérodynamique. La valeur de $\Delta\varphi A$ obtenue par la relation précédente est limitée à des valeurs prédéterminées. La valeur ainsi limitée est prise pour valeur de $\Delta\varphi coA$, si les valeurs absolues de AYco ou AZco sont de niveaux significatifs, par exemple plus grandes qu'un seuil prédéterminé. Sinon, on remplace ladite valeur par une valeur nulle ;

- $\Delta\varphi co1$ et $\Delta\varphi co2$ sont des commandes en variation de roulis par rapport à l'état courant de l'engin volant M, ayant pour objet de donner à la projection de la droite engin-cible dans le champ de mesure CM du détecteur D une composante selon $\vec{Y}^+$, correspondant à la direction autour de laquelle la ligne de visée A1 est orientable ; et
- $\Delta\varphi coE$ est une commande définie à partir desdites commandes $\Delta\varphi co1$ et $\Delta\varphi co2$, par exemple à l'aide de la logique suivante :

$$\begin{cases} \Delta\varphi coE = \Delta\varphi co2, \text{ si } |\Delta\varphi coA - \Delta\varphi co1| > |\Delta\varphi coA - \Delta\varphi co2| \\ \Delta\varphi coE = \Delta\varphi co1, \text{ sinon.} \end{cases}$$

Dans un mode de réalisation particulier, les commandes ou ordres de variation de roulis $\Delta\varphi co1$ et $\Delta\varphi co2$ sont déterminés respectivement à partir des relations suivantes :

$$tg\Delta\varphi co1 = \frac{U1 + U01}{\left[\dfrac{|U2|}{e} + K\right] \times \text{Signe (U2)}}$$

$$tg\Delta\varphi co2 = \frac{U1 - U02}{\left[\dfrac{|U2|}{e} + K\right] \times \text{Signe (U2)}}$$

dans lesquelles :

- tg représente la tangente ;
- e, K, UO1 et U02 sont des valeurs prédéterminées et pouvant être variables selon les phases de vol ; et
- U1 et U2 sont des valeurs écartométriques.

Selon l'invention, les valeurs U1 et U2 sont calculées à partir de grandeurs qui sont fournies par le moyen de calcul C1 estimant la cinématique engin-cible, qui sont représentatives d'écarts entre le vecteur unitaire $\overrightarrow{uEB}$ de la droite passant par l'engin volant M au niveau du détecteur D et par la cible C, et le vecteur unitaire $\vec{X}$ de l'axe longitudinal OX dudit engin volant M et qui sont calculées, par exemple, à l'aide de la formulation vectorielle $\theta^+EBY \, Y^+ + \theta^+EBZ \, Z^+ = \overrightarrow{uEB} \wedge \vec{X}$. Les valeurs de U1 et U2 peuvent alors être choisies telles que :

$$U1 = \theta^+EBZ, \quad U2 = \theta^+EBY.$$

Les valeurs $\Delta\varphi co1$ et $\Delta\varphi co2$ ne sont calculées que si la variable U2 présente une valeur absolue supérieure à une valeur prédéterminée ou si l'expression mathématique $\sqrt{U1^2+U2^2}$ présente une valeur supérieure à une valeur prédéterminée. Sinon, on remplace lesdites valeurs $\Delta\varphi co1$ et $\Delta\varphi co1$ et $\Delta\varphi co2$ par des valeurs nulles.

Les valeurs de $\Delta\varphi co1$ et $\Delta\varphi co2$ ainsi obtenues sont, de préférence, limitées à des valeurs limites prédéfinies.

Dans des modes de réalisation particuliers, on peut exploiter la connaissance des attitudes commandées par le guidage pour modifier les commandes en attitude de l'engin volant M, comme précisé ci-dessous.

A cet effet, dans un premier mode de réalisation, on utilise des fonctions de transfert propres audit engin volant M, entre la variation $\Delta\Gamma Z$ de l'accélération $\Gamma Z$ de l'engin M selon l'axe OZ et la variation $\Delta\Omega Y$ de la vitesse de rotation $\Omega Y$ de l'engin M autour de l'axe OY, du type :

$$\frac{\Delta\Omega Y}{\Delta\Gamma Z} = H(s), \text{ (variable de Laplace } \underline{s})$$

ou entre la variation $\Delta\gamma Y$ de la direction du vecteur vitesse et la variation de vitesse de rotation de l'engin volant M, du type :

$$\frac{\Delta\Omega Y}{\Delta\gamma Y} = G(s).$$

On en déduit directement la variation d'attitude $\Delta\theta Yco$ prévue par le guidage, en tenant compte des informations relatives à l'engin M fournies par l'ensemble E de sources d'informations, par une relation, exprimée en notations de Laplace, du type :

- pour des commandes $\Delta\Gamma Zco$ de guidage en accélération,

$$\Delta\theta Yco = \left[\frac{H(s)}{s}\right].\Delta\Gamma Zco$$

- pour des commandes $\Delta\Omega Yco$ en variation de vitesse angulaire,

$$\Delta\theta Yco = \frac{\Delta\Omega Yco}{s}$$

- pour des commandes $\Delta\gamma Yco$ en variation de direction de vitesse commandée,

$$\Delta\theta Yco = \left[\frac{G(s)}{s}\right].\Delta\gamma Yco$$

Des relations analogues sont définies pour le mouvement autour de l'axe OZ (variation d'attitude $\Delta\theta Zco$) de sorte que les variations d'attitudes $\Delta\theta co$ prévues par le guidage sont :

$$\overrightarrow{\Delta\theta co} = \overrightarrow{\Delta\theta Yco}\ \vec{Y} + \Delta\theta Zco\ \vec{Z}$$

ou en effectuant un changement de repère et en passant aux axes $\overrightarrow{Y^+}$, $\overrightarrow{Z^+}$ :

$$\overrightarrow{\Delta\theta co} = \Delta\theta^+ Yco\ \overrightarrow{Y^+} + \Delta\theta^+ Zco\overrightarrow{Z^+}.$$

En prenant en compte les peudo-attitudes courantes de l'engin M, par rapport à la droite engin-but, c'est-à-dire $\overrightarrow{\theta EB} = \theta EBY\ \vec{Y} + \theta EBZ\ \vec{Z} = \theta^+ EBY\ Y^+ + \theta^+ EBZ\ Z^+$ , calculées par le moyen de calcul C3, on en déduit une consigne en pseudo-attitudes $\overrightarrow{\theta EB}co = \overrightarrow{\theta EB} + \overrightarrow{\Delta\theta co}$, qui exprimée selon les axes $Y^+$ et $Z^+$ permet de définir des écarts équivalents commandés par le guidage

$$\theta^+ EBYco = \theta^+ EBY + \Delta\theta^+ Yco$$

$$\theta^+ EBZco = \theta^+ EBZ + \Delta\theta^+ Zco$$

De plus, la connaissance de ces valeurs, associée à la connaissance des dynamiques de réponse entre les commandes et l'exécution en résultant, permet de définir des écarts $\theta^+ EBYu$ et $\theta^+ EBZu$ (par une pondération des écarts courants et des écarts commandés) susceptibles d'être utilisés dans la définition des commandes $\Delta\varphi co1$ et $\Delta\varphi co2$, en posant :

$$U1 = \theta^+ EBZu, \quad U2 = \theta^+ EBYu.$$

Par ailleurs, dans un second mode de réalisation, on commande directement les pseudo-attitudes, en prévoyant, dans les traitements réalisés par le moyen de calcul C4 et relatifs au pilotage en tangage et en lacet, un asservissement desdites pseudo-attitudes.

Ces pseudo-attitudes peuvent bien entendu être limitées.

A cet effet :

- dans une première variante, on limite directement les pseudo-attitudes $\theta^+ EBYco$ et $\theta^+ EBZco$ à des valeurs prédéterminées et on en déduit une commande limitée ou "écrêtée" $\overrightarrow{\theta EB}co = \theta EBYco\,\vec{Y} + \theta EBZco\,\vec{Z}$ ; tandis que
- dans une seconde variante, on prend en compte une commande non "écrêtée" $\overrightarrow{\theta EB}coNE$, calculée selon le mode de calcul précité pour $\overrightarrow{\theta EB}co$ et décomposée sous la forme $\overrightarrow{\theta EB}coNE = \overrightarrow{\theta Lco}\text{-EAu}\,\vec{Y^+}$, dans laquelle on fait intervenir un angle EAu correspondant à une approximation de l'angle entre l'axe A1 et l'axe OX. Cet angle est défini comme une pondération (choisie en fonction des dynamiques impliquées dans la réalisation des différentes commandes élaborées par le dispositif 1) de deux angles qui correspondent respectivement à l'orientation courante et à l'orientation commandée de la ligne de visée A1 par rapport à l'axe OX.

Ledit vecteur $\overrightarrow{\theta L}co$ peut être soumis à des limitations autour de la ligne de visée A1, des attitudes de l'engin volant M, commandées en tangage et en lacet. Le vecteur $\overrightarrow{\theta L}co$ ainsi limité permet de définir une commande "écrêtée" $\overrightarrow{\theta EB}co$, vérifiant $\overrightarrow{\theta EB}co = \overrightarrow{\theta L}co\text{-EAuY}^+$.

Les différentes limitations réalisées sont définies en fonction de valeurs prédéterminées, en prenant en compte en particulier la taille du champ de mesure CM, des informations disponibles sur le moyen C1 de calcul et d'estimation, la phase de vol et ce que l'on souhaite favoriser entre le guidage et le pointage de la cible C. Notamment, dans la phase précédant l'accrochage de la cible C, il peut être avantageux de favoriser le pointage.

Dans le cadre de la présente invention, les attitudes $\theta^+ EBYu$ et $\theta^+ EBZu$ intervenant dans le calcul de la commande de roulis peuvent faire intervenir les attitudes $\theta^+ EBYco$ et $\theta^+ EBZco$ avant ou après la limitation, selon que l'on souhaite favoriser le guidage ou le pointage de la cible C.

Selon l'invention, lesdits moyens d'orientation 9 qui sont en liaison avec le moyen 16 de mesure et de recopie de l'orientation de la ligne de visée A1, comportent, tel que représenté sur la figure 5 :

- un système de renvoi optique 20 orientable, de type connu, comportant des éléments optiques, tels que par exemple un miroir, un prisme, ... permettant de modifier la ligne de visée A1 du détecteur D, en fonction de son orientation ; et
- un moteur MO ou un actionneur, qui comprend une électronique de commande et qui est commandé par le moyen de calcul C4 par la liaison 10, de manière à modifier l'orientation du système de renvoi optique 20.

Selon l'invention, ledit moteur MO peut être un moteur couple ou un moteur pas à pas.

Dans ce dernier cas, il est possible de commander le pas le plus proche de la position permettant le centrage de la projection Cp.

On notera que, dans le cadre de la présente invention, on peut se contenter d'un moteur rustique, puisque le but est moins d'obtenir un centrage précis que d'approcher la projection Cp de la direction centrale correspondante, pour éviter sa sortie du champ de mesure CM.

Bien entendu, si les positions du moteur sont prévisibles, le moyen de mesure 16 n'est pas nécessaire, ce qui peut par exemple être le cas avec une motorisation bistatique.

En outre, dans un mode de réalisation préféré représenté sur la figure 6, ledit système de renvoi optique 20 comporte un miroir fixe MF, un miroir mobile MM et une optique de focalisation OF. Le miroir mobile MM est déplacé par l'intermédiaire du moteur MO, le moyen de mesure 16 mesurant la rotation dudit miroir MM, ce qui fournit une mesure de l'orientation de la ligne de visée A1 par rapport à l'axe OX avec un rapport de 2.

On notera, par ailleurs, que le moyen de calcul C4 élabore la commande de la rotation de la ligne de visée autour de $Y^+$ par une loi de commande du type poursuite, sur la base d'informations fournies par le moyen de calcul C1 réalisant l'estimation de la cinématique engin-cible et par le moyen de calcul C3 calculant l'écart de l'axe A1 par rapport à l'axe OX, en utilisant des vitesses angulaires de l'engin M, fournies par l'ensemble E de sources d'informations. Les calculs sont réalisés pour compenser le mouvement angulaire de l'engin M, de sorte que, autour de l'axe $Y^+$, la ligne de visée A1 correspond à une poursuite de la cible C adaptée aux différentes dynamiques impliquées par la mise en oeuvre de l'invention et à la taille du champ de mesure CM.

**Revendications**

1. Procédé de guidage d'un engin volant (M) sur une cible (C), ledit guidage présentant différentes phases successives, dont une phase terminale pour laquelle au moins le guidage est réalisé à l'aide de mesures effectuées par un détecteur (D) monté sur ledit engin volant (M) et pointé avec sa ligne de visée vers ladite cible (C) de sorte qu'une projection (Cp) de cette dernière est située sur un champ de mesure (CM) dudit détecteur (D), ainsi qu'à l'aide d'informations issues de sources d'informations (E) montées sur ledit engin volant (M), **caractérisé en ce qu'**au moins dans ladite phase terminale, on commande des attitudes dudit engin volant (M) de manière à centrer ladite projection (Cp) de la cible (C) par rapport à une première direction (AZa) dudit champ de mesure (CM), **en ce que** la ligne de visée dudit détecteur (D) est mobile autour d'une seconde direction (AYa) dudit champ de mesure (CM), différente de ladite première direction (AZa), et **en ce qu'**au moins dans ladite phase terminale, on commande la mobilité de la ligne de visée dudit détecteur (D) de manière à centrer ladite projection (Cp) de la cible (C) par rapport à ladite seconde direction (AYa).

2. Procédé selon la revendication 1, **caractérisé en ce qu'**au moins dans ladite phase terminale, on estime le mouvement relatif entre l'engin volant (M) et la cible (C).

3. Procédé selon l'une des revendications 1 et 2, **caractérisé en ce qu'**au moins dans ladite phase terminale, on commande des attitudes dudit engin volant (M) de manière à répartir la charge aérodynamique sur des axes liés audit engin volant (M).

4. Procédé selon l'une des revendications 1 à 3, **caractérisé en ce que** l'on commande, comme attitude de l'engin volant (M), le roulis de ce dernier.

5. Procédé selon la revendication 4,
   **caractérisé en ce que** l'on utilise des valeurs écartométriques représentatives de l'écartométrie entre une ligne de visée (A1) du détecteur (D) et une droite (A2) passant par le détecteur (D) et la cible (C) pour déterminer un ordre pour la commande de roulis.

6. Procédé selon la revendication 5,
   **caractérisé en ce que** l'on détermine lesdites valeurs écartométriques au moins à partir de certaines des informations suivantes :

   - des informations relatives à des mesures effectuées par ledit détecteur (D) ;
   - des informations inertielles et de navigation ; et
   - des informations relatives à l'orientation de la ligne de visée (A1) du détecteur (D), par rapport à l'engin volant (M).

7. Procédé selon l'une quelconque des revendications 3 à 6,
   **caractérisé en ce que**, pour réaliser simultanément une répartition de la charge aérodynamique sur des axes liés à l'engin volant (M) et le centrage de la projection (Cp) de la cible (C), on commande le roulis à partir d'un ordre $\Delta\varphi co$ de variation de roulis qui vérifie la relation :

$$\Delta\varphi co = \begin{cases} \Delta\varphi coA, \text{ si la valeur } \Delta\varphi coA \text{ est définie entre des valeurs } \Delta\varphi co1 \text{ et } \Delta\varphi co2 \\ \Delta\varphi coE, \text{ sinon} \end{cases}$$

   dans laquelle :

   - $\Delta\varphi coA$ est un ordre de variation de roulis pour répartir la charge aérodynamique ;
   - $\Delta\varphi co1$ et $\Delta\varphi co2$ sont des ordres de variation de roulis, déterminés à partir de l'état effectif dudit engin volant (M) ; et
   - $\Delta\varphi coE$ est un ordre de variation de roulis déterminé à partir desdits ordres $\Delta\varphi co1$ et $\Delta\varphi co2$.

8. Procédé selon la revendication 7,
   **caractérisé en ce que** lesdits ordres $\Delta\varphi co1$ et $\Delta\varphi co2$ de variation de roulis vérifient respectivement les relations

suivantes :

$$tg\Delta\varphi co1 = \frac{U1 + U01}{\left[\dfrac{|U2|}{e} + K\right] \times \text{Signe}\,(U2)}$$

$$tg\Delta\varphi co2 = \frac{U1 - U02}{\left[\dfrac{|U2|}{e} + K\right] \times \text{Signe}\,(U2)}$$

dans lesquelles :

- tg représente la tangente ;
- e, K, U01 et U02 sont des valeurs prédéterminées et
- U1 et U2 sont des valeurs écartométriques.

**9.** Procédé selon la revendication 8,
**caractérisé en ce que** lesdites valeurs écartométriques U1 et U2 vérifient respectivement les relations suivantes :

$$U1 = \theta^{+}EBZu$$

$$U2 = \theta^{+}EBYu$$

dans lesquelles $\theta^{+}EBZu$ et $\theta^{+}EBYu$ représentent respectivement des écarts d'attitudes de l'engin volant par rapport à la droite engin-cible en tangage et en lacet déterminés, d'une part à partir d'attitudes en tangage et en lacet prévues par le guidage de l'engin volant (M) et, d'autre part, à partir d'attitudes courantes de l'engin volant (M), en tangage et en lacet.

**10.** Procédé selon l'une quelconque des revendications précédentes,
**caractérisé en ce que** les écarts d'attitudes commandés dudit engin volant (M) sont limités à des valeurs prédéterminées.

**11.** Procédé selon l'une quelconque des revendications précédentes,
**caractérisé en ce que** l'on détermine des ordres pour commander des variations d'attitudes de manière à favoriser, selon la phase de vol considérée, au moins l'une des actions suivantes : le guidage de l'engin volant (M), le centrage de la projection (Cp) de la cible (C) sur le détecteur (D) et une répartition de la charge aérodynamique sur des axes liés audit engin volant (M).

**12.** Procédé selon l'une quelconque des revendications précédentes,
**caractérisé en ce que** l'on guide, au moins dans une phase ultime de ladite phase terminale, ledit engin volant (M) de manière à limiter son incidence et son dérapage cinématiques.

**13.** Dispositif de guidage d'un engin volant (M) sur une cible (C), ledit dispositif (1) comportant :

- des sources d'informations (E) engendrant des informations relatives audit engin volant (M) ;
- un détecteur (D) susceptible de réaliser des mesures relatives à ladite cible (C), monté sur ledit engin volant (M), et pointé avec sa ligne de visée vers ladite cible (C) de sorte qu'une projection (Cp) de cette dernière est située sur un champ de mesure (CM) dudit détecteur (D) ;

- une unité de calcul (UC) pour déterminer, à partir desdites informations et desdites mesures, au moins dans une phase terminale dudit guidage, des ordres de guidage ; et
- des organes de pilotage (6) réalisant le guidage dudit engin volant (M) en fonction desdits ordres de guidage,

**caractérisé en ce qu'**il comporte de plus des moyens de calcul (C3, C4) pour déterminer des ordres de variation d'attitudes dudit engin volant (M) permettant de centrer la projection (Cp) de ladite cible (C) par rapport à une première direction (AZa) dudit champ de mesure (CM), lesdits ordres de variation d'attitudes étant transmis auxdits organes de pilotage (6), **en ce que** ledit détecteur (D) présente une ligne de visée qui est mobile selon une seconde direction (AYa) du champ de mesure (CM), différente de ladite première direction (AZa), **en ce que** ledit dispositif (1) comporte des moyens d'orientation (9) commandables pour orienter ladite ligne de visée du détecteur (D), et **en ce que** lesdits moyens de calcul (C3, C4) commandent lesdits moyens d'orientation (9) de manière à obtenir le centrage de ladite projection (Cp) de la cible (C) par rapport à ladite seconde direction (AYa).

14. Dispositif selon la revendication 13,
    **caractérisé en ce qu'**il comporte un moyen (C1) pour estimer le mouvement relatif entre l'engin volant (M) et la cible (C).

15. Dispositif selon l'une des revendications 13 et 14,
    **caractérisé en ce qu'**il comporte un moyen (C4) pour superviser ledit dispositif (1).

16. Dispositif selon la revendication 15,
    **caractérisé en ce que** ledit moyen (C4) pour superviser est formé de manière à favoriser, selon la phase de vol considérée, au moins l'une des actions suivantes :

    - le centrage de la projection (Cp) de la cible (C) sur le champ de mesure (CM) du détecteur (D) ;
    - le guidage de l'engin volant (M) ; et
    - une répartition de la charge aérodynamique sur des axes liés audit engin volant (M).

17. Dispositif selon l'une des revendications 13 à 16,
    **caractérisé en ce que** lesdits moyens de calcul (C3, C4) sont intégrés dans ladite unité de calcul (UC).

18. Dispositif selon l'une des revendications 13 à 17,
    **caractérisé en ce que** lesdits moyens d'orientation (9) comportent un système de renvoi optique (20), un moteur (MO) et un moyen (16) de recopie de l'orientation.

19. Dispositif selon la revendication 18,
    **caractérisé en ce que** ledit moteur (10) est un moteur couple et ledit moyen (16) de recopie de l'orientation comprend un potentiomètre.

20. Dispositif selon l'une des revendications 18 et 19,
    **caractérisé en ce que** ledit système de renvoi optique (20) comporte un miroir fixe (MF), un miroir mobile (MM) et une optique de focalisation (OF).

## Patentansprüche

1. Verfahren zum Lenken eines Flugkörpers (M) auf ein Ziel (C), wobei das Lenken verschiedene aufeinanderfolgende Phasen aufweist, zu denen eine Endphase gehört, bei der zumindest die Lenkung mit Hilfe von Messungen, die von einem Detektor (D) durchgeführt werden, der am Flugkörper (M) angebracht und mit seiner Ziellinie auf das genannte Ziel (C) so ausgerichtet ist, dass eine Projektion (Cp) dieses Ziels in einem Messbereich (CM) des Detektors (D) liegt, sowie mit Hilfe von Informationen erfolgt, die aus am genannten Flugkörper (M) montierten Informationsquellen (E) stammen, **dadurch gekennzeichnet, dass** zumindest in der genannten Endphase Fluglagen des Flugkörpers (M) so gesteuert werden, dass die Projektion (Cp) des Ziels (C) in Bezug auf eine erste Richtung (AZa) des Messbereichs (CM) zentriert wird, dadurch, dass die Ziellinie des Detektors (D) um eine zweite Richtung (AYa) des Messbereichs (CM), die sich von der ersten Richtung (AZa) unterscheidet, beweglich ist, und dadurch, dass zumindest in der genannten Endphase die Beweglichkeit der Ziellinie des Detektors (D) so gesteuert wird, dass die Projektion (Cp) des Ziels (C ) in Bezug auf die zweite Richtung (AYa) zentriert wird.

**2.** Verfahren gemäß Anspruch 1,
**dadurch gekennzeichnet, dass** zumindest in der Endphase die relative Bewegung zwischen Flugkörper (M) und Ziel (C ) eingeschätzt wird.

**3.** Verfahren gemäß Anspruch 1 oder 2,
**dadurch gekennzeichnet, dass** zumindest in der Endphase Fluglagen des Flugkörpers (M) so gesteuert werden, dass die aerodynamische Belastung auf mit dem Flugkörper (M) verbundene Achsen verteilt wird.

**4.** Verfahren gemäß einem der Ansprüche 1 bis 3,
**dadurch gekennzeichnet, dass** als Fluglage des Flugkörpers (M) dessen Rollbewegung gesteuert wird.

**5.** Verfahren gemäß Anspruch 4,
**dadurch gekennzeichnet, dass** zur Ermittlung eines Befehls für die Steuerung der Rollbewegung Abweichungsmesswerte verwendet werden, die repräsentativ für die Abweichungsmessung zwischen einer Ziellinie (A1) des Detektors (D) und einer durch den Detektor (D) und das Ziel ( C) verlaufenden Geraden (A2) sind.

**6.** Verfahren gemäß Anspruch 5,
**dadurch gekennzeichnet, dass** die Abweichungsmesswerte mindestens ausgehend von bestimmten der folgenden Informationen ermittelt werden:

Informationen bezüglich der vom Detektor (D) durchgeführten Messungen;
Informationen zu Trägheitskraft und Navigation; und
Informationen hinsichtlich der Ausrichtung der Ziellinie (A1) des Detektors (D) in Bezug auf den Flugkörper (M).

**7.** Verfahren gemäß einem der Ansprüche 3 bis 6,
**dadurch gekennzeichnet, dass** zur gleichzeitigen Durchführung einer Verteilung der aerodynamischen Belastung auf mit dem Flugkörper (M) verbundene Achsen und der Zentrierung der Projektion (Cp) des Ziels (C) die Rollbewegung ausgehend von einem Befehl ΔΦco zur Veränderung der Rollbewegung gesteuert wird, der die folgende Relation bestätigt

$$\Delta\Phi\text{co} = \begin{cases} \Delta\Phi\text{coA, wenn der Wert } \Delta\Phi\text{coA zwischen den Werten } \Delta\Phi\text{co1 und } \Delta\Phi\text{co2 definiert ist} \\ \text{anderenfalls } \Delta\Phi\text{coE,} \end{cases}$$

in der:

- ΔΦcoA ein Befehl zur Änderung der Rollbewegung ist, um die aerodynamische Belastung zu verteilen;
- ΔΦco1 und ΔΦco2 Befehle zur Änderung der Rollbewegung sind, die ausgehend vom tatsächlichen Zustand des Flugkörpers (M) ermittelt wurden; und
- ΔΦcoE ein Befehl zur Änderung der Rollbewegung ist, der ausgehend von den Befehlen ΔΦco1 und ΔΦco2 ermittelt wurde.

**8.** Verfahren gemäß Anspruch 7,
**dadurch gekennzeichnet, dass** die Befehle ΔΦco1 und ΔΦco2 zur Änderung der Rollbewegung jeweils folgende Relationen bestätigen:

$$\text{tg}\Delta\Phi\text{co1} = \frac{U1 + U01}{\left[\dfrac{|U2|}{e} + K\right] x Zeichen(U2)}$$

$$\mathbf{tg}\Delta\Phi\mathbf{co2} = \frac{U1 + U02}{\left[\dfrac{|U2|}{e} + K\right] xZeichen(U2)}$$

in denen

tg die Tangente darstellt;

e, K, U01 und U02 vorher festgelegte Werte sind; und

U1 und U1 Abweichungsmesswerte sind.

9. Verfahren gemäß Anspruch 8,
**dadurch gekennzeichnet, dass** die Abweichungsmesswerte U1 und U2 jeweils die folgenden Relationen bestätigen:

$$U1 = {}^{+}EBZu$$

$$U2 = {}^{+}EBYu,$$

in denen $^{+}EBZu$ und $^{+}EBYu$ jeweils Abweichungen von Fluglagen des Flugkörpers in Bezug auf die Gerade Flugkörper - Ziel in Nickschwingung und Gierbewegung darstellen, die zum einen ausgehend von durch die Lenkung des Flugkörpers (M) vorgesehenen Nickschwingungs- und Gierbewegungsfluglagen und zum anderen ausgehend von geläufigen Fluglagen des Flugkörpers (M) bei Nickschwingung und in Gierbewegung ermittelt wurden.

10. Verfahren gemäß einem der vorstehenden Ansprüche,
**dadurch gekennzeichnet, dass** die Abweichungen von gesteuerten Fluglagen des Flugkörpers (M) auf vorher festgelegte Werte begrenzt sind.

11. Verfahren gemäß einem der vorstehenden Ansprüche,
**dadurch gekennzeichnet, dass** Befehle zur Steuerung der Veränderungen der Fluglage festgelegt werden, um entsprechend der betrachteten Flugphase zumindest eine der folgenden Aktionen zu begünstigen: die Lenkung des Flugkörpers (M), die Zentrierung der Projektion (Cp) des Ziels (C) auf den Detektor (D) und eine Verteilung der aerodynamischen Belastung auf mit dem Flugkörper (M) verbundenen Achsen.

12. Verfahren gemäß einem der vorstehenden Ansprüche,
**dadurch gekennzeichnet, dass** zumindest in einer letzten Phase der genannten Endphase der Flugkörper (M) so gelenkt wird, dass sein kinematischer Trimm und Schiebeflug begrenzt werden.

13. Vorrichtung zum Lenken eines Flugkörpers (M) auf ein Ziel (C ), wobei die Vorrichtung folgendes umfasst:

Informationsquellen (E), die Informationen zum Flugkörper (M) erzeugen,
einen Detektor (D), der Messungen zum Ziel (C) durchführen kann, am Flugkörper (M) angebracht und mit seiner Ziellinie auf das genannte Ziel (C) so ausgerichtet ist, dass eine Projektion (Cp) dieses Ziels in einem Messbereich (CM) des Detektors (D) liegt;
eine Recheneinheit (UC), um ausgehend von den Informationen und Messungen zumindest in einer Endphase der Lenkung Lenkbefehle zu ermitteln; und
Steuerorgane (6), die die Lenkung des Flugkörpers (M) in Abhängigkeit von den Lenkbefehlen durchführen,

**dadurch gekennzeichnet, dass** es außerdem Rechenmittel (C3, C4) zur Ermittlung von Befehlen zur Änderung der Fluglagen des Flugkörpers (M) umfasst, die es gestatten, die Projektion (Cp) des Ziels (C) in Bezug auf eine erste Richtung (AZa) des Messbereichs (CM) zu zentrieren, wobei die Befehle zur Fluglagenänderung zu den Lenkorganen (6) übertragen werden, dadurch, dass der Detektor (D) eine Ziellinie besitzt, die entsprechend einer zweiten Richtung (AYa) des Messbereichs (CM) beweglich ist, die sich von der ersten Richtung (AZa) unterscheidet, dadurch, dass die Vorrichtung (1) Ausrichtungsmittel (9) besitzt, die zur Ausrichtung der Ziellinie des Detektors (D) steuerbar sind, und dadurch, dass die Rechenmittel (C3, C4) die Ausrichtungsmittel (9) so steuern, dass die Zentrierung der Projektion (Cp) des Ziels (C) in Bezug auf die zweite Richtung (AYa) erzielt wird.

**14.** Vorrichtung gemäß Anspruch 13,
**dadurch gekennzeichnet, dass** sie ein Mittel (C1) zur Abschätzung der relativen Bewegung zwischen Flugkörper (M) und Ziel (C) umfasst.

**15.** Vorrichtung gemäß Anspruch 13 oder 14,
**dadurch gekennzeichnet, dass** sie ein Mittel (C4) zur Überwachung der genannten Vorrichtung (1) umfasst.

**16.** Vorrichtung gemäß Anspruch 15,
**dadurch gekennzeichnet, dass** das Mittel (C4) zur Überwachung so konzipiert ist, dass es entsprechend der betrachteten Flugphase zumindest eine derfolgenden Aktionen begünstigt:

- die Zentrierung der Projektion (Cp) des Ziels (C ) auf den Messbereich (CM) des Detektors (D);
- die Lenkung des Flugkörpers (M); und
- eine Verteilung der aerodynamischen Belastung auf mit dem Flugkörper (M) verbundenen Achsen.

**17.** Vorrichtung gemäß einem der Ansprüche 13 bis 16,
**dadurch gekennzeichnet, dass** die Rechenmittel (C3, C4) in die genannte Recheneinheit (UC) integriert sind.

**18.** Vorrichtung gemäß einem der Ansprüche 13 bis 17,
**dadurch gekennzeichnet, dass** die Ausrichtungsmittel (9) ein System zum optischen Zurückstrahlen (20), einen Motor (MO) und ein Mittel (16) zum Kopieren der Ausrichtung umfassen.

**19.** Vorrichtung gemäß Anspruch 18,
**dadurch gekennzeichnet, dass** der Motor (1) ein Drehmomentmotor ist und das Mittel (16) zum Kopieren ein Potentiometer umfasst.

**20.** Vorrichtung gemäß Anspruch 18 und 19,
**dadurch gekennzeichnet, dass** das System zum optischen Zurückstrahlen (20) einen festen Spiegel (MF), einen beweglichen Spiegel (MM) und eine Fokussierungsoptik (OF) umfasst.

**Claims**

**1.** Process for guiding a flying craft (M) onto a target (C), the said guiding exhibiting various successive phases, including a terminal phase for which at least the guidance is carried out with the aid of measurements performed by a detector (D) mounted on the said flying craft (M) and pointed with its line of sight toward the said target (C) so that a projection (Cp) of the latter is situated on a field of measurement (CM) of the said detector (D), as well as with the aid of information emanating from information sources (E) mounted on the said flying craft (M), **characterized in that** at least in the said terminal phase, attitudes of the said flying craft (M) are controlled in such a way as to centre the said projection (Cp) of the target (C) with respect to a first direction (AZa) of the said measurement field (CM), **in that** the line of sight of the said detector (D) is moveable about a second direction (AYa) of the said field of measurement (CM), which is different from the said first direction (AZa), and **in that** at least in the said terminal phase, the mobility of the line of sight of the said detector (D) is controlled in such a way as to centre the said projection (Cp) of the target (C) with respect to the said second direction (AYa).

**2.** Process according to Claim 1, **characterized in that** at least in the said terminal phase, the relative motion between the flying craft (M) and the target (C) is estimated.

**3.** Process according to one of Claims 1 and 2,
**characterized in that** at least in the said terminal phase, attitudes of the said flying craft (M) are controlled in such a way as to distribute the aerodynamic load over axes tied to the said flying craft (M).

**4.** Process according to one of Claims 1 to 3,
**characterized in that** the roll of the flying craft (M) is controlled as attitude of the latter.

**5.** Process according to Claim 4, **characterized in that** deviation measurement values representative of the deviation measurement between a line of sight (A1) of the detector (D) and a straight line (A2) passing through the detector (D) and the target (C) are used to determine a command for roll control.

6. Process according to Claim 5, **characterized in that** the said deviation measurement values are determined at least from certain of the following information:

   - information relating to measurements performed by the said detector (D);
   - inertial information and navigational information; and
   - information relating to the orientation of the line of sight (A1) of the detector (D), with respect to the flying craft (M).

7. Process according to any one of Claims 3 to 6, **characterized in that**, to simultaneously carry out a distributing of the aerodynamic load over axes tied to the flying craft (M) and the centring of the projection (Cp) of the target (C), the roll is controlled on the basis of a roll variation command $\Delta\varphi co$ which satisfies the relation:

$$\Delta\varphi co = \begin{cases} \Delta\Delta\varphi coA \text{, if the value } \Delta\varphi coA \text{ is defined between} \\ \text{values } \Delta\varphi co1 \text{ and } \Delta\varphi co2 \\ \Delta\varphi coE \text{, otherwise} \end{cases}$$

in which:

   - $\Delta\varphi coA$ is a roll variation command for distributing the aerodynamic load;
   - $\Delta\varphi co1$ and $\Delta\varphi co2$ are roll variation commands determined from the actual state of the flying craft (M); and
   - $\Delta\varphi coE$ is a roll variation command determined from the said commands $\Delta\varphi co1$ and $\Delta\varphi co2$.

8. Process according to Claim 7, **characterized in that** the said roll variation commands $\Delta\varphi co1$ and $\Delta\varphi co2$ respectively satisfy the following relations:

$$\tan\Delta\varphi co1 = \frac{U1 + U01}{\left[\frac{|U2|}{e} + K\right] \times \text{Sign }(U2)}$$

$$\tan\Delta\varphi co2 = \frac{U1 - U02}{\left[\frac{|U2|}{e} + K\right] \times \text{Sign }(U2)}$$

in which:

   - tan represents the tangent;
   - e, K, U01 and U02 are predetermined values; and
   - U1 and U2 are deviation measurement values.

9. Process according to Claim 8, **characterized in that** the said deviation measurement values U1 and U2 respectively satisfy the following relations:

$$U1 = \theta^+ EBZu$$

$$U2 = \theta^+ EBYu$$

in which $\theta^+EBZu$ and $\theta^+EBYu$ respectively represent deviations in pitch and yaw attitudes of the flying craft with respect to the craft/target straight line which are determined, on the one hand from pitch and yaw attitudes prescribed by the guidance of the flying craft (M) and, on the other hand, from current pitch and yaw attitudes of the flying craft (M).

10. Process according to any one of the preceding claims, **characterized in that** the controlled deviations of attitudes of the said flying craft (M) are limited to predetermined values.

11. Process according to any one of the preceding claims, **characterized in that** commands for controlling variations in attitudes are determined in such a way as to favour, according to the flight phase considered, at least one of the following actions: the guidance of the flying craft (M), the centring of the projection (Cp) of the target (C) on the detector (D) and a distributing of the aerodynamic load over axes tied to the said flying craft (M).

12. Process according to any one of the preceding claims, **characterized in that**, at least in an ultimate phase of the said terminal phase, the said flying craft (M) is guided in such a way as to limit its kinematic incidence and its kinematic sideslip.

13. Device for guiding a flying craft (M) onto a target (C), the said device (1) comprising:

    - information sources (E) generating information relating to the said flying craft (M);
    - a detector (D) capable of carrying out measurements relating to the said target (C), and mounted on the said flying craft (M) and pointed with its line of sight toward the said target (C) so that a projection (Cp) of the latter is situated on a field of measurement (CM) of the said detector (D);
    - a computation unit (UC) for determining, from the said information and the said measurement, at least in a terminal phase of the said guidance, guidance commands; and
    - steering members (6) carrying out the guidance of the said flying craft (M) as a function of the said guidance commands,

    **characterized in that** it moreover comprises computation means (C3, C4) for determining commands for varying attitudes of the said flying craft (M) making it possible to centre the projection (Cp) of the said target (C) with respect to a first direction (AZa) of the said measurement field (CM), the said attitude variation commands being transmitted to the said steering members (6), **in that** the said detector (D) exhibits a line of sight which is moveable according to a second direction (AYa) of the measurement field (CM), which is different from the said first direction (AZa), **in that** the said device (1) comprises orientation means (9) controllable so as to orient the said line of sight of the detector (D), and **in that** the said computation means (C3, C4) control the said orientation means (9) in such a way as to obtain the centring of the said projection (Cp) of the target (C) with respect to the said second direction (AYa).

14. Device according to Claim 13, **characterized in that** it comprises a means (C1) for estimating the relative motion between the flying craft (M) and the target (C).

15. Device according to one of Claims 13 and 14, **characterized in that** it comprises a means (C4) for supervising the said device (1).

16. Device according to Claim 15, **characterized in that** the said means (C4) for supervising is formed in such a way as to favour, according to the flight phase considered, at least one of the following actions :

    - the centring of the projection (Cp) of the target (C) on the measurement field (CM) of the detector (D);
    - the guidance of the flying craft (M); and
    - a distributing of the aerodynamic load over axes tied to the said flying craft (M).

17. Device according to one of Claims 13 to 16, **characterized in that** the said computation means (C3, C4) are integrated into the said computation unit (UC).

18. Device according to one of Claims 13 to 17, **characterized in that** the said orientation means (9) comprise an optical relay system (20), a motor (MO) and a means (16) of duplicating the orientation.

19. Device according to Claim 18, **characterized in that** the said motor (10) is a torque motor and the said means (16) of duplicating the orientation comprises a potentiometer.

20. Device according to one of Claims 18 and 19, **characterized in that** the said optical relay system (20) comprises a fixed mirror (MF), a moveable mirror (MM) and a focusing optic (OF).

# FIG.1

# FIG.2

FIG.3

FIG.5

FIG.6

FIG.4A

FIG.4B

FIG.4C

FIG.4D